Europäisches Patentamt

(19) **European Patent Office**

**Office européen des brevets**

(11) Numéro de publication: **0 040 565**
**B1**

## (12) FASCICULE DE BREVET EUROPEEN

(45) Date de publication du fascicule du brevet:
**16.10.85**

(51) Int. Cl.⁴: **H 05 B 6/80,** A 21 B 2/00, A 23 B 4/06

(21) Numéro de dépôt: **81400770.4**

(22) Date de dépôt: **15.05.81**

(54) **Appareil électrique de cuisson par application séquentielle d'infrarouges et de micro-ondes.**

(30) Priorité: **16.05.80 FR 8011024**

(43) Date de publication de la demande:
**25.11.81 Bulletin 81/47**

(45) Mention de la délivrance du brevet:
**16.10.85 Bulletin 85/42**

(84) Etats contractants désignés:
**AT BE CH DE FR GB IT LI LU NL SE**

(56) Documents cités:
**DE - B - 1 184 877**
**FR - A - 2 285 076**
**GB - A - 1 470 345**
**US - A - 3 151 230**
**US - A - 3 972 277**

(73) Titulaire: **SOCIETE FRANCAISE D'APPLICATION DES MICRO-ONDES (S.F.A.M.O.), B. P.10, F-88370 Plombieres-Les-Bains (FR)**

(72) Inventeur: **Bellavoine, Robert, Route de Hadol Les Granges, F-88370 Plombieres-les-Bains (FR)**

(74) Mandataire: **Corre, Jacques Denis Paul et al, Cabinet Regimbeau 26, Avenue Kléber, F-75116 Paris (FR)**

ACTORUM AG

**Description**

La présente invention concerne un appareil de réchauffage ou de cuisson de matières crues, et plus particulièrement mais non exclusivement un appareil pouvant servir à la décongélation et à la cuisson d'aliments.

Il est connu d'utiliser les émissions électro-magnétiques hyperfréquences pour produire un échauffement au sein d'une matière absorbant les ondes électro-magnétiques à la fréquence considérée. Le brevet GB-A-1 470 345 par exemple décrit un four à micro-ondes comprenant un boîtier définissant une enceinte de traitement, associé à une source hyper-fréquence, et apte à loger un rotor recevant des produits à chauffer.

Le brevet US-A-3 151 230 décrit également un four à micro-ondes. Ce four comprend un boîtier associé à une source hyperfréquence, définissant une enceinte de traitement et muni de deux canaux opposés d'entrée/sortie par lesquels transite une bande support de produits à chauffer.

Les fours à micro-ondes décrits dans ces documents comportent des écrans ayant pour but d'éviter la propagation de micro-ondes vers l'extérieur du four.

Ce mode de chauffage permet de créer la chaleur à l'intérieur même du produit à chauffer ou à cuire et il est de ce fait d'action très rapide et uniforme. Malheureusement, si ce procédé est excellent pour un certain nombre d'opérations telles que la décongélation de produit surgelé ou la cuisson uniforme de n'importe quelle matière lorsque l'uniformité de cuisson et la rapidité sont les qualités essentielles désirées le chauffage par micro-ondes n'est pas tout à fait approprié pour la cuisson de certains aliments pour lesquels on souhaite que se produise un phénomène de croutage ou de dorage de la surface d'aliment (croûte du pain plus cuite que l'intérieur, surface grillée de la viande etc.).

On sait utiliser d'autre part pour obtenir ce phénomène de croutage ou de dorage une source de chaleur à infrarouges qui effectivement produit une chaleur concentrée à la surface exposé de l'aliment et produit la croûte ou la surface grillée souhaitée. Mais, surtout si l'aliment est épais, le rayonnement infrarouge ne permet une cuisson à cœur du produit qu'au prix d'une grande consommation d'énergie car la pénétration des rayons infrarouges n'est que superficielle, la transmission de chaleur vers l'intérieur de l'aliment ne se faisant que par conduction.

Le brevet DE-B-1 184 877 propose un appareil de cuisson équipé d'un magnétron. L'appareil est divisé en deux chambres, à savoir une chambre de traitement et une chambre de préchauffage. Pour remplacer l'irradiation infrarouge supplémentaire généralement utilisée pour chauffer des denrées, comme par exemple des produits de boulangerie, et obtenir le dorage et le croûtage, en surface, de ces denrées, l'énergie rayonnante diffusée dans la chambre de préchauffage est prélevée sur le circuit de refroidissement du magnétron.

De préférence, la chambre de préchauffage est formée d'un espace étanche aux micro-ondes, disposée entre deux régions soumises aux micro-ondes. Pour assurer cette étanchéité vis-à-vis des micro-ondes, le document DE-B-1 184 877 propose de disposer des parois mobiles, formant protection contre le rayonnement des micro-ondes, articulées sur le carter de l'appareil au niveau de la séparation entre la chambre de traitement et la chambre de préchauffage.

Un but de la présente invention est d'associer un chauffage par infrarouge et par micro-ondes pour obtenir à la fois une cuisson à cœur du produit et un phénomène de dorage ou de croûtage superficiel.

La simple réunion dans une même enceinte d'une source de micro-ondes et d'une source de rayons infrarouges qui fonctionneraient en même temps pour réaliser les deux phénomènes désirés n'est pas appropriée car elle ne présente pas une souplesse suffisante pour s'adapter à la cuisson d'aliments divers ou d'aliments arrivant sous des formes différentes (frais ou surgelés). D'autre part, il faut considérer que l'application d'un chauffage par micro-ondes s'effectue instantanément dès la mise en route de la source, alors que le chauffage par infrarouges demande un délai très long de préchauffage pendant lequel la source infrarouge fonctionne mais ne produit pas la quantité de rayons infrarouges suffisante pour provoquer le phénomène de cuisson superficielle désirée.

Un autre but de la présente invention est donc de proposer un appareil ayant la souplesse qu'il faut pour s'adapter à divers aliments, pour permettre aussi bien des cycles de décongélation que de cuisson à cœur et de cuisson avec dorage ou croûtage, les cycles de chauffage pouvant comprendre des périodes d'émission micro-ondes, des périodes de repos, des périodes d'émission infrarouge, et éventuellement des périodes d'émission simultanée de micro-ondes et d'infrarouges, avec un réglage à volonté des durées de ces périodes.

L'appareil électrique de cuisson proposé par la présente invention comprend une enceinte dont au moins une première région comporte un élément chauffant à infrarouges et une seconde région comporte une source de micro-ondes, ainsi qu'un chariot apte à supporter une matière à cuire et un moyen de déplacement du chariot pour présenter la matière à cuire successivement dans les diverses régions en regard de l'élément chauffant à infrarouges et de la source de micro-ondes et l'appareil est caractérisé par le fait que ladite seconde région qui comporte une source de micro-ondes est délimitée par des parois intérieures métalliques, le chariot présente également des parois métalliques, les parois métalliques du chariot sont conformées pour former en combinaison avec les parois métalliques de l'enceinte délimitant ladite seconde région, lorsque le chariot est placé dans cette seconde région, une chambre de micro-ondes contenant la matière à cuire, essentiellement étanche vis-à-vis de l'émission de micro-ondes vers la première région et vers l'extérieur de l'enceinte et par le fait que la paroi de fond métallique des chariots est recouverte d'un matériau transparent aux micro-ondes et constituant un volant calorifique important, matériau sur lequel est déposée la matière à cuire.

Cette disposition permet notamment de prévoir que la matière à cuire est soumise initialement à une décongélation par micro-ondes exclusivement, en même temps qu'on commence à faire chauffer la source à infrarouges en vue de la cuisson superficielle ultérieure de la matière dont la température aura été uniformément réchauffée par les micro-ondes. Le transfert du produit dans la région à infrarouges se fera en tout cas lorsque l'élément à infrarouge aura atteint sa température de fonctionnement normal.

On réalise, par simple déplacement du chariot de l'une des régions vers l'autre, les opérations successives indépendantes de cuisson qui n'interfèrent pas l'une avec l'autre grâce au fait que le chariot lui-même est constitué de manière à former une chambre de micro-ondes étanche lorsqu'il est dans la seconde région comportant une source de micro-ondes.

La disposition d'une couche de matériau transparent aux micro-ondes sur la paroi de fond métallique des chariots destinés à recevoir les produits à cuire permet d'une part de garantir une bonne cuisson de la partie inférieure du produit en autorisant l'accès des micro-ondes à celle-ci, d'autre part d'obtenir un volant calorifique important qui évite les phénomènes de collage lors de la pose des patons surgelés.

Il est particulièrement souhaitable aussi que lorsque le chariot est dans la première région, c'est-à-dire celle qui contient l'élément à infrarouges, il délimite par ses parois et les parois métalliques de l'enceinte une chambre d'infrarouges contenant l'élément à cuire porté par le chariot, cette chambre étant essentiellement étanche vis à vis de l'émission d'infrarouges vers la seconde région et vers l'extérieur, et essentiellement étanche vis à vis de la réception de micro-ondes provenant de la source dans la deuxième région. Ceci signifie donc que non seulement le chariot délimite une chambre étanche lorsqu'il est dans la seconde région mais il délimite aussi une autre chambre étanche simplement par son passage dans la première région.

On peut alors envisager selon l'invention deux sortes de construction, l'une destinée à traiter un produit isolé en lui faisant subir un cycle qui peut être complexe de chauffages micro-ondes et infrarouges alternés et ayant des durées prédéterminées réglables, l'autre plus appropriée au traitement en série de produits subissant tous le même cycle qui peut d'ailleurs aussi être complexe.

Dans la première construction, il est prévu une enceinte qui comprend essentiellement seulement deux régions, une première région contenant un élément infrarouge et une seconde région contenant une source de micro-ondes avec un chariot qui porte le produit à traiter et qui peut se déplacer de l'une des régions vers l'autre et réciproquement grâce à des moyens de déplacement et de guidage qui sont aptes à faire effectuer au chariot un mouvement d'aller et retour entre les deux régions avec des arrêts de durée plus ou moins grande dans chacune des deux régions.

Le chariot a alors de préférence la forme d'un bac se déplaçant horizontalement, la partie supérieure des parois verticales du bac coopérant avec des parties métalliques des parois de l'enceinte pour constituer entre elles un espace étroit formant piège à ondes lorsque le chariot est dans l'une des deux régions. Cet espace étroit évite le passage des micro-ondes de la deuxième région (contenant la source de micro-ondes) vers la première région ou vers l'extérieur, et ceci de préférence aussi bien lorsque le chariot est dans la première région que lorsqu'il est dans la deuxième région. L'émission de micro-ondes peut être synchronisée avec le déplacement du chariot, de sorte que l'émission ne se produit que lorsque le chariot est dans la deuxième région. Au contraire, l'émission d'infrarouges peut se produire, comme on l'a expliqué, d'une manière non synchronisée, c'est-à-dire même lorsque le chariot est dans la deuxième région, puisqu'on veut prévoir une possibilité de préchauffage de l'élément à infrarouges. C'est pourquoi, s'il est impératif que le chariot délimite bien une enceinte étanche aux micro-ondes lorsqu'il est dans la deuxième région, il n'est pas forcément absolument nécessaire que le chariot délimite aussi une enceinte étanche aux micro-ondes lorsqu'il est dans la première région.

L'autre possibilité de construction de l'appareil selon l'invention, plus appropriée au traitement d'aliments en série, par exemple à la décongélation et/ou à la cuisson de pain, ou de viennoiseries, se présente sous la forme d'une enceinte qui comporte une série de premières et secondes régions alternant ou se succédant dans un ordre déterminé par la succession d'opérations à effectuer sur l'aliment à traiter. Le moyen de déplacement est apte à déplacer le chariot séquentiellement dans chacune des régions successives au lieu de le faire aller et venir simplement entre deux régions.

De préférence, les régions se succèdent le long d'une boucle et les moyens de déplacement sont aptes à faire suivre au chariot une boucle qui l'amène successivement dans les diverses régions en le ramenant sensiblement à son point de départ; le produit à traiter est introduit sur le chariot en un point de la boucle en amont de la région correspondant à la première opération que le produit doit subir; il est évacué après avoir subi la dernière opération en un autre point de la boucle, après quoi on peut réintroduire un nouveau produit sur le chariot vidé.

Dans ces conditions, il est parfaitement possible de prévoir que le moyen de déplacement du chariot est en fait apte à faire avancer simultanément une pluralité de chariots qui se succède le long de la boucle si les régions sont disposées en boucle. Le pas de succession des chariots doit correspondre alors au pas de succession des régions de sorte que lorsqu'un chariot amène un élément à chauffer au niveau d'une région, un autre chariot amène simultanément un autre élément à chauffer au niveau d'une autre région.

On réalise ainsi une possibilité de traitement en chaîne des produits sans avoir besoin, pour introduire un produit dans l'appareil, d'attendre que le produit traité précédemment soit sorti de l'appareil.

Dans cette seconde construction, les régions se suivent de préférence dans un couloir ayant des parois étanches aux micro-ondes, au moins dans les secondes régions, contenant des sources de micro-ondes, et les chariots ont chacun au moins une face opaque aux micro-ondes et sont disposés à des intervalles tels que lorsqu'un chariot amène un élément à chauffer dans une seconde région, il définisse avec le couloir et un chariot immédiatement adjacent une chambre sensiblement étanche aux micro-ondes.

Par exemple, les chariots sont constitués avec une paroi de fond métallique et des parties de parois latérales métalliques venant, lorsque le chariot amène un élément à chauffer dans une seconde région, s'appliquer en regard de la paroi métallique de l'enceinte et tout près d'elle, sur une largeur appropriée pour que l'intervalle étroit entre ces parois constitue un piège à ondes empêchant la sortie de micro-ondes au-delà de la deuxième région fermée par le chariot.

De même, il est préférable que lorsque le chariot amène un élément à chauffer dans une première région contenant un élément infrarouges, consécutive à une seconde région contenant une source de micro-ondes, les parties de parois latérales métalliques du chariot viennent tout près des parois de l'enceinte et ne laissent qu'un intervalle étroit sur une largeur telle que cet intervalle forme un piège à ondes empêchant la pénétration de micro-ondes dans la première région.

Dans un mode de réalisation, les chariots sont des plateaux suspendus librement par un axe à des maillons d'une chaîne sans fin entraînés par un moteur et un pignon qui déplacent les plateaux par pas correspondant à leur espacement.

Les premières et secondes régions ne sont pas forcément alternées régulièrement; on peut prévoir que plusieurs premières régions contenant des sources infrarouges sont disposées successivement, des secondes régions contenant une source de micro-ondes étant intercalées entre certains couples de premières régions successives.

On peut prévoir aussi dans un tel système de traitement en chaîne que des régions sans source micro-ondes et sans élément infrarouge sont prévues sur le trajet des chariots pour permettre d'accomoder les temps de passage différents des produits dans les régions de chauffage différentes.

Il peut être avantageux de disposer les régions successives verticalement, une première région contenant un élément infrarouge étant placée à la partie la plus haute des trajets des chariots, là où se concentre la chaleur qui monte, pour accélérer le phénomène de croûtage ou de dorage du produit soumis aux infrarouges dans cette région.

Quelque soit le mode de construction de l'appareil, mais surtout dans le premier mode où le système traite un produit à la fois, on peut prévoir que le chariot porte un support pour un élément à chauffer, ce support étant monté à rotation pour modifier l'orientation de l'élément vis à vis de la position de l'élément infrarouge. Cette rotation du support peut être commandée par un moteur électrique entraînant un axe sur lequel est fixé le support; elle peut aussi être commandée si on le désire par un système de cames, notamment pour le second type de construction où les produits sont traités en chaîne.

D'autres caractéristiques et avantages de l'invention apparaîtront à la lecture de la description détaillée qui suit et qui est faite en référence aux dessins annexés dans lesquels:

– la figure 1 montre une vue générale de face d'un appareil de cuisson selon l'invention;

– la figure 2 montre une coupe longitudinale de cet appareil;

– la figure 3 montre une coupe transversale de la zone de micro-ondes de l'appareil de la figure 1;

– la figure 4 montre en coupe transversale la zone infrarouge de l'appareil de la figure 1;

– la figure 5 représente en coupe transversale un autre mode de réalisation d'un appareil de cuisson selon l'invention;

– la figure 6 représente une vue de face de l'appareil de la figure 5;

– la figure 7 représente une coupe vue de dessus de l'appareil des figures 5 et 6;

– la figure 8 représente deux exemples de réalisation d'un chariot ou plateau adapté à une utilisation d'un appareil des figures 5 à 7.

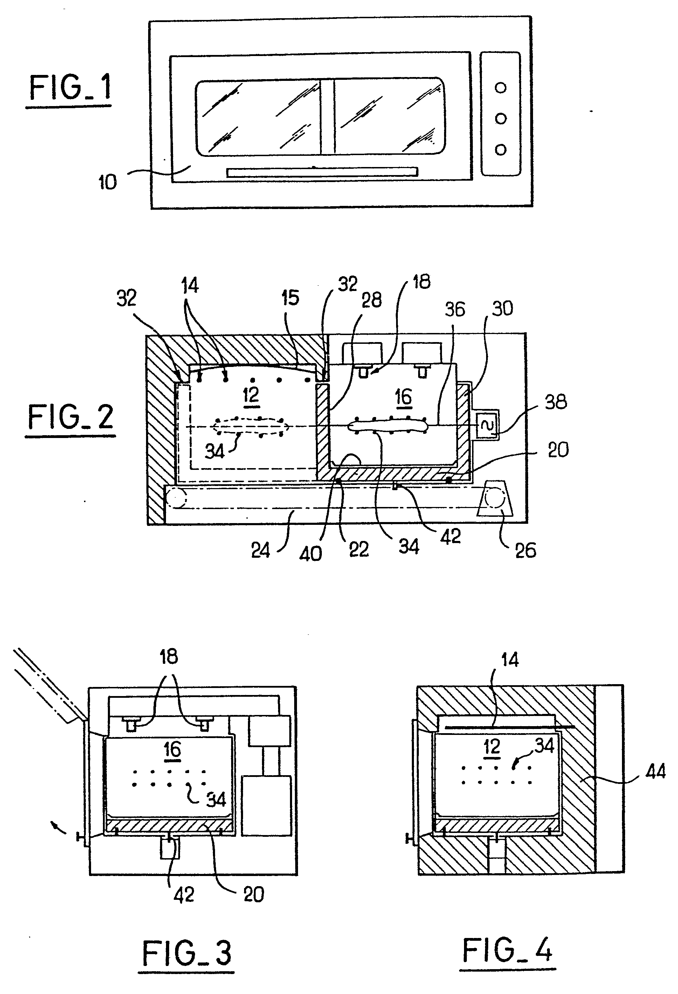

L'appareil représenté à la figure 1 est un four mixte à micro-ondes et infrarouges pouvant servir à la décongélation, la cuisson ou simplement la remise en température d'aliments.

Il se présente sous la forme d'une enceinte rectangulaire pourvue à sa partie avant d'une porte basculante qui peut être ouverte pour l'introduction des aliments. Cette porte 10 est de préférence en verre trempé à double vitrage pourvue d'une tôle perforée permettant la visibilité mais faisant office de blindage aux micro-ondes de sorte que les micro-ondes émises à l'intérieur de l'enceinte ne s'échappent pas au dehors. Un système de piège à ondes avec joint absorbant, étanche aux micro-ondes est prévu sur tout le pourtour de la porte. Ce piège peut être réalisé de manière classique en prévoyant une petite cavité entourant toute la porte et reliée à l'enceinte intérieur par une fente étroite. Les dimensions de la cavité et de la fente sont calculées en fonction de la fréquence des micro-ondes pour réaliser l'absorption de celles-ci.

La porte ainsi rendue étanche au rayonnement électromagnétique est verrouillée automatiquement pendant l'émission des micro-ondes par souci de sécurité.

L'appareil de cuisson de la figure 1 comporte sur sa face avant des boutons de commande et de programmation permettant d'effectuer des cycles de décongélation, de chauffage et de cuisson choisie.

A la figure 2, on peut voir la constitution intérieure de l'appareil. Il comprend deux zones de chauffage. La première est une zone de chauffage infrarouge 12 qui comporte à sa partie supérieure des éléments radiants 14 au-dessus desquels peut être placé un réflecteur 15 ayant pour but de diriger la chaleur rayonnée par les éléments 14 vers le bas de l'enceinte où on placera l'aliment à chauffer.

L'autre zone de l'enceinte est une zone 16 de chauffage par micro-ondes qui comporte à sa partie supérieure une ou plusieurs sources 18 d'émission de micro-ondes. Ces sources peuvent être des antennes de couplage reliées à un magnétron placé à l'arrière de l'appareil en dehors de l'enceinte proprement dite.

Dans l'exemple représenté, au moins la partie supérieure de l'enceinte au niveau de la deuxième région (zone de micro-ondes 16) est constituée par une paroi métallique. Les autres parois et en particulier celles de la première région (zone infrarouge) peuvent être des parois non métalliques et thermiquement isolantes. Il peut être préférable cependant de prévoir que toutes les parois intérieures de l'enceinte soient métalliques.

Un chariot 20 peut se déplacer, par exemple guidé sur des roulettes 22 et entraîné par une chaîne 24 elle-même mise en mouvement par un moto-réducteur 26 électrique à deux sens de rotation.

Le chariot 20 possède un fond par lequel il est entraîné et il roule sur le fond de l'enceinte. Il possède aussi deux parois latérales 28 et 30 qui s'étendent jusqu'à la partie supérieure de l'enceinte, sans empêcher cependant le déplacement latéral du chariot.

Les dimensions du chariot, et notamment l'écartement des parois latérales 28 et 30, sont telles que le chariot peut se situer complètement soit dans la première région 12 de rayonnement infrarouge, soit dans la deuxième région 16 de rayonnement micro-ondes. Lorsqu'il est dans l'une des régions, les parois du chariot délimitent avec la partie supérieure de l'enceinte dans cette région une chambre fermée dans laquelle se trouve un aliment à chauffer porté par le chariot et dans laquelle est émis un rayonnement soit infrarouge s'il s'agit de la zone 12, soit micro-onde s'il s'agit de la zone 16.

L'ajustement entre la partie supérieure de l'enceinte et le haut des parois latérales du chariot doit être tel que d'une part le passage du chariot s'effectue librement d'une zone à l'autre, et d'autre part que malgré cela les chambres délimitées dans chacune des régions par le chariot entre ses parois intérieures et le haut de l'enceinte soient essentiellement étanches vis à vis de l'entrée ou de la sortie de micro-ondes dans ces chambres.

A cet effet, on prévoit que les éléments radiants infrarouges ou hyperfréquences sont logés dans des renfoncements du plafond 32 de l'enceinte, le haut des parois latérales 30 du chariot venant en regard du plafond 32 lui-même lorsque le chariot est dans l'une ou l'autre des régions. L'intervalle étroit entre le haut des parois latérales du chariot et le plafond définit une fente dont l'épaisseur et la largeur sont calculées pour constituer un piège à ondes empêchant le passage des ondes hyperfréquences de la région 16 vers la région 12. De même à l'arrière et à l'avant du chariot, la proximité latérale des parois 30 avec le fond de l'enceinte où avec la porte à l'avant de l'enceinte est telle qu'une fente soit définie pour former piège à onde et réaliser un isolement de la région 16 vis à vis des micro-ondes.

On notera que le chariot peut n'avoir que deux parois latérales comme cela est représenté sur les figures ou trois parois si l'on veut mettre une paroi de chariot du côté arrière de l'enceinte pour améliorer l'isolation de la chambre de microondes lorsque le chariot est dans la deuxième région. De manière générale, on prévoira qu'il n'y a pas de paroi de chariot vers l'avant, c'est-à-dire vers la porte de l'appareil de sorte qu'on puisse introduire facilement des aliments dans le chariot par la porte 10 du four.

Le chariot lui-même porte les aliments à cuire ou à décongeler, par exemple sur une sole 34 en fil d'acier inoxydable sur laquelle le produit à traiter est déposé. Pour certains produits, ils seront tenus en place par un abattant en fil d'acier inoxydable permettant en particulier le retournement du produit. La sole est en effet montée sur une tige 36 qui peut être entraînée en rotation par un moto-réducteur électrique 38 solidaire du chariot. Ce retournement est particulièrement conseillé lors des séquences infrarouges où la chaleur maximum est évidement produite du côté de l'exposition aux éléments radiants.

On notera que la sole en fil d'acier inoxydable est réalisée avec un espacement de fils suffisamment grand pour ne pas empêcher le passage du rayonnement micro-onde vers le produit.

Un ramasse-goutte 40 peut être disposé au fond du chariot pour certains produits.

A la figure 3, on a représenté en coupe transversale la structure de la zone micro-ondes 16 de l'appareil. L'enceinte dans laquelle la zone 16 est créée occupe la partie avant de l'appareil. A l'arrière sont disposés notamment le magnétron alimentant les antennes 18 pénétrant à l'intérieur de l'enceinte et constituant les sources hyperfréquences. L'alimentation du magnétron est également disposée à l'arrière de l'enceinte, dans un coffre général de l'appareil qui protège l'ensemble des composants électriques du four. Le chariot 20 peut être muni à sa partie inférieure d'un ergot 42 qui vient en prise avec la chaîne 24 de sorte qu'il peut être entraîné en va et vient d'une zone à l'autre du four.

A la figure 4 on a représenté en coupe transversale la zone infrarouge 12 de l'appareil. On y voit les éléments radiants 14 sous forme de rampes allongées placées dans le renfoncement ménagé dans le plafond 32 de l'enceinte 12. De préférence, la partie de l'enceinte correspondant à la zone infrarouge est calorifugée par un isolant thermique épais 44 tout autour de l'enceinte, un passage étant laissé dans la paroi inférieure de l'enceinte pour le passage de la chaîne d'entraînement 24.

Ainsi, avec le chariot déplaçable ayant au moins deux parois latérales métalliques (pour être opaques aux micro-ondes), ces deux parois étant celles qui s'étendent transversalement à la direction de déplacement du chariot, on réalise l'isolation désirée entre les deux chambres 12 et 16 constituées respectivement quand le chariot est dans la zone 12 et quand il est dans la zone 16.

Le fonctionnement du four sera programmé en fonction des opérations que l'on désire effectuer sur tel ou tel produit. La programmation pourra consister à préétablir des séquences de durée déterminée pendant lesquelles le chariot se situera dans l'une ou l'autre zone, et pendant lesquelles la source d'énergie correspondante, infrarouge ou micro-onde sera actionnée. Cette séquence pourra comprendre une commande d'application des micro-ondes synchronisée ou non avec la position du chariot dans la zone de micro-ondes. Elle pourra comprendre aussi une commande d'application d'énergie infrarouge démarrée avant que le chariot ne se déplace vers la zone infrarouge, de sorte qu'un temps de préchauffage des éléments radiants 14 soit ménagé et que les infrarouges s'appliquent immédiatement avec l'énergie désirée lorsque le chariot arrivera dans la zone infrarouge.

Bien entendu, certaines séquences pourront être simplement les séquences de décongélation en micro-ondes, ou de grillage en infrarouge seulement. Il est bien entendu possible aussi de prévoir dans les programmes des temps de repos sans application de micro-ondes ni d'infrarouges.

On notera finalement pour ce mode de réalisation de l'invention que le chariot est de préférence amovible, c'est-à-dire qu'il peut être sorti du four par la porte 10 et déconnecté électriquement (connexion électrique du moteur 38), pour permettre son nettoyage.

La disposition de l'entraînement avec simplement des roulettes de support et un ergot 42 venant en prise avec une chaîne d'entraînement facilite le retrait du chariot par soulèvement.

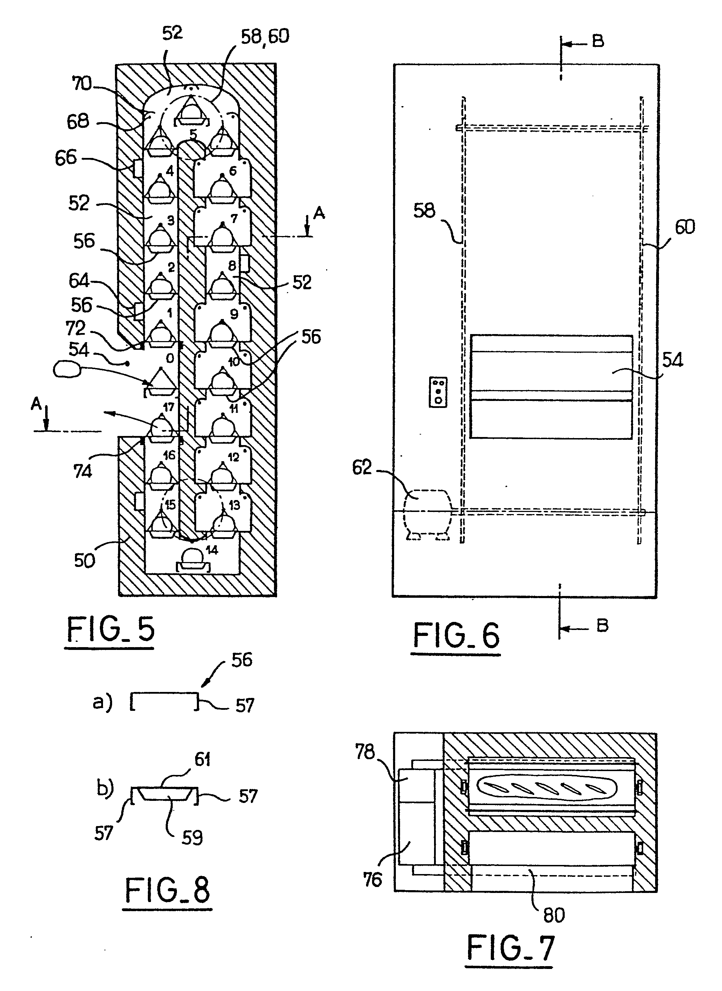

Aux figures 5 à 8, on a représenté un deuxième mode de réalisation de l'invention, destiné au traitement en chaîne de produits tels que par exemple des pâtons surgelés que l'on introduit dans la chaîne pour une décongélation et une cuisson progressive et qui ressortent sous forme de pain cuit sans qu'il y ait eu manipulation des pâtons après leur décongélation. Cette caractéristique est particulièrement avantageuse car les pâtons décongelés sont très fragiles et ne peuvent supporter une manipulation sans risque de détérioration.

L'appareil est conçu pour que l'introduction des pâtons surgelés et le retrait des pâtons cuits se fassent du même côté, et même de préférence par la même ouverture, un seul opérateur pouvant effectuer à la fois le chargement et le retrait du pâton.

L'appareil comprend une enceinte générale 50 qui peut être calorifugée et dont l'espace intérieur est conformé comme un conduit ou couloir en boucle allongée 52 de largeur essentiellement constante sauf peut être aux extrémités ou à certains endroits où des renfoncements sont prévus pour loger des sources de chauffage hyperfréquence ou infrarouge.

Dans le conduit 52 peuvent se déplacer une pluralité de supports de produit à traiter (décongélation, chauffage, cuisson) qui constituent des chariots de transport du produit le long de la boucle 52 de manière que le produit puisse subir plusieurs étapes de traitement entre son introduction sur un chariot et son évacuation à la sortie de la boucle.

Une ouverture 54 est prévue dans l'enceinte pour faire communiquer l'extérieur avec la boucle 52 et permettre cette introduction et cette évacuation.

Les chariots sont des balancelles ou plateaux suspendus 56 accrochés à leurs extrémités à deux chaînes sans fin 58, 60 qui suivent la forme de la boucle 52 et s'étendent respectivement de chaque côté de l'enceinte en suivant des trajets parallèles (voir aussi figure 6 pour la disposition parallèle des chaînes 58 et 60 entraînées par un moteur commun 62 et des pignons).

Les plateaux 56 sont suspendus par leurs extrémités de telle manière qu'ils gardent toujours une position horizontale en particulier pendant les portions de trajet où la boucle 52 change de direction.

Les chariots se succèdent à un pas constant et le moteur électrique 62 qui les entraîne est capable de faire avancer la chaîne de préférence par pas correspondant à l'espacement des chariots. Ceux-ci s'étendent essentiellement sur toute la section de la boucle, de sorte que pratiquement sur la majorité du trajet des chariots 56, on peut dire que l'espace compris entre deux chariots et les parois de l'enceinte entre ces deux chariots constitue une chambre fermée qui contient à chaque fois un produit placé sur le chariot inférieur. Une pluralité de chambres est ainsi constituée par la boucle 52. A un moment donné où s'effectue une opération de traitement, on peut dire que certaines des chambres ainsi définies entre deux chariots consécutifs se situent dans une région d'application d'infrarouges, certaines autres dans une région d'application de micro-ondes, certaines autres dans une région sans application d'énergie, et certaines autres dans une région avec application simultanée d'infrarouges et de micro-ondes. Ainsi, chacun des chariots 56 amène, pour une position de fonctionnement donnée de la chaîne, un produit dans une région de type donné que l'on peut appeler respectivement première, seconde, troisième et quatrième régions.

Dans l'exemple représenté à la figure 5, la boucle 52 est divisée en dix-huit régions numérotées 0 à 17 et qui se répartissent de la manière suivante:

– région 0: introduction du produit, région de troisième type sans application d'énergie,

– région 1: région de deuxième type; une source de micro-ondes 64 débouche dans cette région,

– régions 2 et 3: troisième type, pas d'application d'énergie,

– région 4: région de deuxième type, une source de micro-ondes 66 débouche dans cette région,

– région 5 correspondant à une extrémité de la boucle 52: région de premier type; des éléments à rayonnement infrarouges 68 avec des réflecteurs 70 sont répartis dans cette région;

– régions 6, 7 et 9 à 13: régions de premier type; des sources infrarouges avec leur réflecteur sont disposées dans chacune de ces régions;

– régions 8 et 15: régions de second type; des sources de micro-ondes sont prévues;

– régions 14, 16 et 17 (déchargement du produit) régions de troisième type sans application d'énergie.

On n'a pas prévu ici de région de quatrième type, avec application simultanée d'infrarouges et de micro-ondes, mais on pourrait le prévoir dans d'autres cas.

Les régions sans application d'énergie correspondent à des temps de repos entre deux émissions d'énergie, en particulier entre deux émissions de micro-ondes, en vue de la décongélation, afin de favoriser l'homogénéité des températures au sein du produit qui se décongèle et avant l'application d'infrarouges pour la cuisson superficielle du produit.

Les régions de second type 8 et 15, intercalées au milieu de régions de premier type, sont prévues pour accélérer la cuisson du produit.

La cadence de déplacement de la chaîne, pour faire subir à chacun des produits successivement des étapes du traitement, est commandée à partir des boutons de programmation de l'appareil, et est fonction du temps de cuisson global désiré pour chaque produit. Le temps d'émission des micro-ondes dans chaque deuxième région est réglable en fonction des programmes choisis; en particulier il peut y avoir synchronisation de l'arrivée d'un chariot dans une seconde région (région de micro-ondes) et du démarrage de l'émission micro-ondes dans cette région. Cependant, l'émission peut être plus courte que le temps de séjour du chariot dans cette région.

Selon les produits traités, on peut prévoir que seules certaines des sources infrarouges sont mises en service.

Les parois de l'enceinte en boucle 52 sont métalliques au moins dans les secondes régions, contenant des sources hyperfréquences, et les plateaux ont eux aussi une surface métallique et sont ajustés dans le couloir où ils se déplacent, de sorte que des micro-ondes émises par une source dans une seconde région soient confinées dans cette région et n'atteignent que le produit situé sur le chariot inférieur, sans pouvoir s'échapper dans les régions voisines et vers les produits situés sur les autres chariots.

L'ajustement des chariots 56 qui couvrent toute la section du couloir 52 est conservé sur toute la longueur de ce couloir, en tous cas aux endroits où se situent les chariots aux points où ils stationnent (mouvement d'avance pas par pas de la chaîne), et existe de préférence aussi même là où les régions consécutives d'applications d'infrarouges (premières régions) sont prévues.

Etant donné que l'ajustement des chariots entre les bords des parois de l'enceinte ne peut être parfait, puisqu'il faut que les chariots coulissent librement dans le couloir 52, on prévoit, pour éviter l'échappement de micro-ondes en dehors des régions où elles doivent être confinées, que les plateaux constituant les chariots 56 comportent des bords latéraux dont la surface, venant s'appliquer contre les parois latérales de l'enceinte, à des dimensions calculées pour former un piège à ondes dit piège quart d'onde.

Deux exemples de forme de chariot ou plateaux suspendus 56 sont montrés à la figure 8. L'une correspond simplement à une plaque métallique dont les parois latérales sont repliées pour venir en contact avec les parois latérales de l'enceinte. Le pâton est posé sur la partie supérieure.

La deuxième forme est légèrement plus complexe: le plateau métallique comporte encore des parois latérales repliées 57 mais sa partie centrale est renforcée en 59 et une plaque de céramique 61 est posée sur le dessus du plateau, plaque sur laquelle sont posés les pâtons. Ce deuxième cas de figure est prévu pour les produits nécessitant une émission micro-ondes sur leur face inférieure en contact avec le plan de pose. La céramique est transparente aux micro-ondes et la pénétration se fait donc également par le dessous du pâton, ce qui n'est pas le cas pour la réalisation de la figure 8a.

On a, en effet, constaté qu'il était particulièrement avantageux que la sole sur laquelle sont disposés les pâtons surgelés soit constituée d'un plateau métallique auquel est superposé un matériau neutre à l'action des micro-ondes ou très peu absorbant, et constituant de plus, un volant calorifique très important. Ainsi, malgré le temps nécessaire au retrait des pains cuits et la pose des pâtons congelés, cette sole reste à une température élevée (250°) pour éviter les phénomènes de collage et le manque de cuisson à la partie inférieure du produit.

Il faut de plus prévoir, au niveau de l'entrée et de la sortie de la boucle 52 (régions 0 et 17, des joints 72 et 74 absolument étanches aux micro-ondes, (joints absorbants) avec piège à ondes).

On notera que la disposition verticale de la boucle 52 présente l'avantage de limiter dans de très fortes proportions les déperditions de chaleur de la zone de cuisson. En effet, cette chaleur est concentrée d'une part, dans la zone arrière de l'appareil (zone où les chariots redescendent), car c'est la zone où la plus grande quantité d'énergie, sous forme d'infrarouges, est émise. D'autre part, l'effet de cheminée par convection naturelle entraîne les calories à la partie supérieure, zone parfaitement étanche et de surcroît devant être la plus chaude afin d'accélérer le phénomène de croûtage initial des pâtons après leur décongélation (région 5).

Finalement, l'émission des micro-ondes est assurée par des alimentations disposées sur le côté de l'appareil comme on peut le voir sur la figure 7 qui représente une coupe de l'appareil dans un plan horizontal: on y voit schématisés un magnétron et son alimentation 76, et une alimentation 78 pour les éléments radiants infrarouges. Le magnétron émet, par l'intermédiaire d'un guide d'ondes 80 s'étendant le long d'une région de deuxième type, une énergie micro-ondes qui se transmet dans ladite région par une fente couplant la deuxième région au guide d'ondes sur la longueur de celui-ci. Les champs électriques hyperfréquences ainsi introduits dans la cavité constituée entre deux chariots sont très bien répartis par ce système d'alimentation.

## Revendications

1. Appareil électrique de cuisson, comprenant une enceinte dont au moins une première région (12) comporte un élément chauffant (14) à infrarouges et une seconde région (16) comporte une source de micro-ondes (18), ainsi qu'un chariot (20) apte à supporter une matière à cuire et un moyen de déplacement du chariot pour présenter la matière à cuire successivement dans les diverses régions en regard de l'élément chauffant à infrarouges (14) et de la source de micro-ondes (18) caractérisé par le fait que
— ladite seconde région (16) qui comporte une source de micro-ondes (18) est délimitée par des parois intérieures métalliques,
— le chariot (20) présente également des parois métalliques,
— les parois métalliques du chariot (20) sont conformées pour former en combinaison avec les parois métalliques de l'enceinte délimitant ladite seconde région (16), lorsque le chariot (20) est placé dans cette seconde région, une chambre de micro-ondes contenant la matière à cuire, essentiellement étanche vis-à-vis de l'émission de micro-ondes vers la première région et vers l'extérieur de l'enceinte et par le fait que la paroi de fond métallique des chariots (56) est recouverte d'un matériau (61) transparent aux micro-ondes et constituant un volant calorifique important, matériau sur lequel est déposée la matière à cuire.

2. Appareil selon la revendication 1, caractérisé par le fait que lorsque le chariot (20) est dans la première région (12), il délimite par ses parois et les parois métalliques de l'enceinte une chambre d'infrarouges contenant l'élément à cuire, cette chambre étant essentiellement étanche vis-à-vis de l'émission d'infrarouges vers la seconde région (16) et vers l'extérieur, et essentiellement étanche vis-à-vis de la réception de micro-ondes provenant de la source dans la deuxième région.

3. Appareil selon l'une des revendications 1 et 2, caractérisé par le fait qu'il est prévu une première région (12) contenant un élément infrarouge (14), une seconde région (16) contenant une source de micro-ondes (18) et un chariot (20), et par le fait que le moyen de déplacement (24, 26) est apte à faire effectuer au chariot (20) un mouvement d'aller et retour entre les deux régions (12, 16) avec arrêt de durée plus ou moins grande dans chacune des deux régions.

4. Appareil selon la revendication 3, caractérisé par le fait que le chariot (20) a la forme d'un bac se déplaçant horizontalement, la partie supérieure des parois verticales (28, 30) coopérant avec les parois de l'enceinte pour constituer entre elles un espace étroit formant piège à ondes lorsque le chariot (20) est dans l'une des deux régions.

5. Appareil selon l'une des revendications 1 et 2, caractérisé par le fait qu'une série de premières et secondes régions est prévue dans l'enceinte (50), et que le moyen de déplacement (58, 60, 62) est apte à déplacer le chariot (56) séquentiellement dans chacune des régions successives (figure 5).

6. Appareil selon la revendication 5, caractérisé par le fait que les régions sont disposées le long d'une boucle (52) et que les moyens de déplacement (58, 60, 62) sont aptes à faire suivre au chariot (56) une boucle le ramenant sensiblement à son point de départ.

7. Appareil selon l'une des revendications 5 et 6, caractérisé par le fait que le moyen de déplacement (58, 60, 62) est apte à faire avancer simultanément une pluralité de chariots de sorte que lorsqu'un chariot amène un élément à chauffer au niveau d'une région, un autre chariot amène simultanément un autre élément à chauffer au niveau d'une autre région.

8. Appareil selon la revendication 7, caractérisé par le fait que les régions se suivent dans un couloir (52) ayant des parois étanches aux micro-ondes au moins dans les secondes régions, contenant des sources de micro-ondes (64, 66) et par le fait que les chariots (56) ont chacun au moins une face opaque aux micro-ondes et sont disposés à des intervalles tels que lorsqu'un chariot amène un élément à chauffer dans une seconde région, il définisse avec le couloir (52) et un chariot (56) immédiatement adjacent une chambre sensiblement étanche aux micro-ondes.

9. Appareil selon l'une des revendications 5 à 8, caractérisé par le fait que les chariots (56) sont constitués avec une paroi de fond métallique et des parties de parois latérales métalliques venant, lorsque le chariot amène un élément à chauffer dans une seconde région, s'appliquer en regard de la paroi métallique de l'enceinte (50) et tout près d'elle, sur une largeur appropriée pour que l'intervalle étroit entre ces parois constitue un piège à ondes empêchant la sortie de micro-ondes au-delà de la deuxième région fermée par le chariot.

10. Appareil selon la revendication 9, caractérisé par le fait que lorsque le chariot (56) amène un élément à chauffer dans une première région contenant un élément infrarouge (68), ses parties de parois latérales métalliques viennent tout près des parois de l'enceinte et ne laissent qu'un intervalle étroit sur une largeur telle que cet intervalle forme un piège à ondes empêchant la pénétration de micro-ondes dans la première région.

11. Appareil selon l'une des revendications 5 à 10, caractérisé par le fait que les chariots sont des plateaux (56) suspendus librement par un axe à des maillons d'une chaîne (58, 60) sans fin entraînée par un moteur (62) et un pignon.

12. Appareil selon l'une des revendications 5 à 11, caractérisé par le fait que les moyens de déplacement (62) sont agencés pour déplacer les chariots par pas correspondant à leur espacement.

13. Appareil selon l'une des revendications 5 à 12, caractérisé par le fait que plusieurs premières régions contenant une source infrarouge (70) sont disposées successivement et que des secondes régions contenant une source de micro-ondes (64, 66) sont intercalées entre certains couples de premières régions successives.

14. Appareil selon l'une des revendications 5 à 13, caractérisé par le fait que des régions sans source micro-onde et sans élément infrarouge sont prévues sur le trajet des chariots (figure 5).

15. Appareil selon l'une des revendications 5 à 14, caractérisé par le fait que des régions avec application simultanée d'infrarouges et de micro-ondes sont prévues sur le trajet des chariots.

16. Appareil selon l'une des revendications 5 à 15, caractérisé par le fait que les premières et secondes régions sont superposées verticalement, une première région contenant un élément infrarouge (68) étant placée à la partie la plus haute du trajet des chariots.

17. Appareil selon l'une des revendications 1 à 16, caractérisé par le fait que le chariot porte un support pour un élément à chauffer, ce support étant monté à rotation pour permettre une modification de l'orientation de l'élément vis-à-vis de la position de l'élément infrarouge.

18. Appareil selon la revendication 17, caractérisé par le fait que la rotation du support est commandée par un moteur électrique entraînant un axe sur lequel est fixé le support.

## Claims

1. An electric cooking appliance, comprising an enclosed space, at least a first region (12) of which comprises an infrared heating element (14) and a second region (16) comprises a microwave source (18), as well as a carrier (20) suitable for supporting a substance to be cooked and a means for moving the carrier for successively introducing the substance to be cooked in the different regions facing the infrared heating element (14) and the microwave source (18), characterised in that
– the said second region (16) which comprises a microwave source (18) is delimited by interior metal walls,

– the carrier (20) likewise has metal walls,
– the metal walls of the carrier (20) are shaped such that they form, in combination with the metal walls of the enclosed space delimiting the said second region (16), when the carrier (20) is positioned in this second region, a microwave chamber containing the substance to be cooked, which is essentially impervious to the emission of microwaves towards the first region and towards the exterior of the enclosed space, and in that the metal bottom wall of the carriers (56) is covered by a material (61) which is transparent to microwaves and which constitutes a major calorific regulator, the substance to be cooked being placed on this material.

2. An appliance according to claim 1, characterised in that, when the carrier (20) is in the first region (12), its walls and the metallic walls of the enclosed space delimit an infrared chamber containing the cooking element, this chamber being essentially impervious to infrared emission towards the second region (16) and towards the exterior, and essentially impervious to the reception of microwaves originating from the source in the second region.

3. An appliance according to one of claims 1 and 2, characterised in that a first region (12) containing an infrared element (14), a second region (16) containing a microwave source (18) and a carrier (20) are provided, and in that the displacement means (24, 26) is adapted to cause the carrier (20) to move backwards and forwards between the two regions (12, 16) with a shorter or longer stay in each of the two regions.

4. An appliance according to claim 3, characterised in that the carrier (20) is in the shape of a through moving horizontally, the upper part of the vertical walls (28, 30) co-operating with the walls of the enclosed space to form between them a narrow space forming a wave trap when the carrier (20) is in one of the two regions.

5. An appliance according to one of claims 1 and 2, characterised in that a series of first and second regions is provided in the enclosed space (50), and that the displacement means (58, 60, 62) is adapted to move the carrier (56) sequentially in each of the successive regions (Fig. 5).

6. An appliance according to claim 5, characterised in that the regions are arranged along a loop (52) and that the displacement means (58, 60, 62) are adapted to cause the carrier (56) to follow a loop which substantially returns it to its starting point.

7. An appliance according to one of claims 5 and 6, characterised in that the displacement means (58, 60, 62) is adapted to cause a plurality of carriers to advance simultaneously, such that when one carrier brings a heating element to the level of one region, another carrier simultaneously brings another heating element to the level of another region.

8. An appliance according to claim 7, characterised in that the regions succeed each other in a connecting passage (52) having walls which are impervious to microwaves at least in the second regions containing microwave sources (64, 66) and in that the carriers (56) each have at least one face which is opaque to microwaves and are arranged at intervals, such that when one carrier brings a heating element into a second region, it defines, with the connecting passage (52) and an immediately adjacent carrier (56), a chamber which is substantially impervious to microwaves.

9. An appliance according to one of claims 5 to 8, characterised in that the carriers (56) are formed with a metal bottom wall, and parts of metal lateral walls are applied, when the carrier brings a heating element into a second region, to the metallic wall of the enclosed space (50), and close to it, along a suitable width such that the narrow space between these walls forms a wave trap preventing the outlet of microwaves beyond the second region sealed by the carrier.

10. An appliance according to claim 9, characterised in that when the carrier (56) brings a heating element into a first region containing an infrared element (68), its metal lateral wall parts come to the walls of the enclosed space and only leave a narrow space along a width such that this space forms a wave trap preventing the penetration of microwaves into the first region.

11. An appliance according to one of claims 5 to 10, characterised in that the carriers are plates (56) freely suspended along an axis with continuous chain links (58, 60), driven by a motor (62) and a pinion.

12. An appliance according to one of claims 5 to 11, characterised in that the displacement means (62) are designed to move the carriers at a pace corresponding to their spacing.

13. An appliance according to one of claims 5 to 12, characterised in that several first regions containing an infrared source (70) are successively arranged, and that second regions containing a microwave source (64, 66) are intercalated between certain pairs of successive first regions.

14. An appliance according to one of claims 5 to 13, characterised in that regions without a microwave source and without an infrared element are provided along the path of the carriers (Fig. 5).

15. An appliance according to one of claims 5 to 14, characterised in that regions with simultaneous application of infrared and microwaves are provided along the path of the carriers.

16. An appliance according to one of claims 5 to 15, characterised in that the first and second regions are superposed vertically, a first region containing an infrared element (68) being placed at the uppermost part of the path of the carriers.

17. An appliance according to one of claims 1 to 16, characterised in that the carrier carries a support for a heating element, this support being rotatably mounted to allow modification of the orientation of the element with respect to the position of the infrared element.

18. An appliance according to claim 17, characterised in that the rotation of the support is controlled by an electric motor driving an axle on which the support is fixed.

**Patentansprüche**

1. Elektrische Backanlage mit einer Umwandung, von der wenigstens ein erster Bereich (12) ein Infrarot-Heizelement (14) und ein zweiter Bereich (16) eine Mikrowellenquelle (18) umschliesst, sowie einem Wagen (20), der Backmaterie tragen kann, und einer Einrichtung zur Verschiebung des Wagens, um die Backmaterie sukzessiv in die verschiedenen Bereiche gegenüber von dem Infrarot-Heizelement (14) und der Mikrowellenquelle (18) einzubringen, dadurch gekennzeichnet, dass

– der zweite Bereich (16), welcher eine Mikrowellenquelle (18) enthält, von metallischen Innenwänden begrenzt wird,

– der Wagen (20) gleichermassen metallische Wände aufweist,

– die metallischen Wände des Wagens (20) angepasst sind, um, in Kombination mit den metallischen Wänden der begrenzenden Umwandung, wenn der Wagen (20) in diesem zweiten Bereich angeordnet ist, den genannten zweiten Bereich (16) zu bilden, eine gegen Mikro-Wellen-Emission in den ersten Bereich und nach aussen im wesentlichen dichte Mikrowellenkammer mit Backmaterie, und dadurch, dass

– die metallische Bodenwand der Wagen (56) von einem Material (61) bedeckt ist, welches für Mikrowellen transparent ist und einen wichtigen Wärme erzeugenden Belag darstellt, auf welchem Material die Backmaterie gelagert wird.

2. Vorrichtung nach Anspruch 1, dadurch gekennzeichnet, dass der Wagen (20), wenn er in dem ersten Bereich (12) ist, durch seine Wände und die metallischen Wände der Umwandung eine Infrarotkammer mit dem zu backenden Element begrenzt, wobei diese Kammer im wesentlichen dicht gegen Infrarot-Emission in den zweiten Bereich (16) und nach aussen, und im wesentlichen dicht gegenüber dem Empfang von Mikro-Wellen ist, welche von der Quelle in dem zweiten Bereich stammen.

3. Vorrichtung nach einem der Ansprüche 1 und 2, dadurch gekennzeichnet, dass ein erster Bereich (12), welcher ein Infrarot-Element (14) enthält, ein zweiter Bereich (16), der eine Mikrowellenquelle (18) enthält und ein Wagen (20) vorgesehen sind, und dadurch, dass die Verschiebungseinrichtung (24, 26) dazu imstande ist, eine Hin- und Herbewegung des Wagens (20) zwischen den beiden Bereichen (12, 16), mit Aufenthalt von mehr oder weniger grosser Dauer in jedem der beiden Bereiche, zu bewirken.

4. Vorrichtung nach Anspruch 3, dadurch gekennzeichnet, dass der Wagen (20) die Form eines Kastens hat, welcher sich horizontal verschiebt, wobei der obere Teil der vertikalen Wände (28, 30) mit den Wänden der Umwandung zusammenwirkt, um zwischen ihnen einen schmalen Zwischenraum zu schaffen, der eine Wellenfalle bildet, wenn der Wagen (20) in dem einen der beiden Bereiche ist.

5. Vorrichtung nach einem der Ansprüche 1 und 2, dadurch gekennzeichnet, dass eine Serie von ersten und zweiten Bereichen in der Umwandung (50) vorgesehen ist, und dass die Verschiebungseinrichtung (58, 60, 62) den Wagen (56) schrittweise in jeden der aufeinanderfolgenden Bereiche (Figur 5) verschieben kann.

6. Vorrichtung nach Anspruch 5, dadurch gekennzeichnet, dass die Bereiche längs einer Schleife (52) angeordnet sind, und dass die Verschiebungseinrichtungen (58, 60, 62) imstande sind, den Wagen (56) einer Schleife folgen zu lassen, wobei er im wesentlichen an seinen Ausgangspunkt zurückgeführt wird.

7. Vorrichtung nach einem der Ansprüche 5 und 6, dadurch gekennzeichnet, dass die Verschiebungseinrichtung (58, 60, 62) gleichzeitig eine Vielzahl von Wagen vorschieben kann, so dass, wenn ein Wagen ein zu erhitzendes Element auf die Höhe eines Bereiches heranführt, ein anderer Wagen gleichzeitig ein zu erhitzendes Element auf die Höhe eines anderen Bereiches heranführt.

8. Vorrichtung nach Anspruch 7, dadurch gekennzeichnet, dass die Bereiche in einem Durchgang (52) aufeinanderfolgen, der wenigstens in den zweiten Bereichen, welche Mikrowellenquellen (64, 66) enthalten, gegen Mikrowellen dichte Wände hat, und dadurch, dass alle Wagen (56) wenigstens eine für Mikrowellen undurchlässige Fläche haben und in Intervallen derartig angeordnet sind, dass, wenn ein Wagen ein zu erhitzendes Element in einen zweiten Bereich einbringt, er mit dem Durchgang (52) und einem unmittelbar angrenzenden Wagen (56) eine Kammer definiert, die im wesentlichen dicht gegen Mikrowellen ist.

9. Vorrichtung nach einem der Ansprüche 5 bis 8, dadurch gekennzeichnet, dass die Wagen (56) mit einer metallischen Bodenwand und Teilen seitlicher Metallwände ausgebildet sind, die, wenn der Wagen ein zu erhitzendes Element in einen zweiten Bereich heranführt, sich gegenüber der metallischen Wand der Umwandung (50) und dicht neben ihr auf einer Breite anordnen, die dazu geeignet ist, dass das enge Intervall zwischen diesen Wänden eine Wellenfalle bildet, welche den Austritt von Mikrowellen aus dem zweiten Bereich, der durch den Wagen verschlossen wird, verhindert.

10. Vorrichtung nach Anspruch 9, dadurch gekennzeichnet, dass, wenn der Wagen (56) ein zu erhitzendes Element in einen ersten Bereich mit einem Infrarot-Element (68) heranführt, seine seitlichen metallischen Wandteile ganz nah an die Wände der Umwandung kommen und auf einer Breite nur ein enges Intervall lassen, damit dieses Intervall eine Wellenfalle bildet, welche das Eindringen der Mikrowellen in den ersten Bereich verhindert.

11. Vorrichtung nach einem der Ansprüche 5 bis 10, dadurch gekennzeichnet, dass die Wagen Platten (56) sind, welche durch eine Achse von Gliedern einer Endloskette (58, 60) frei aufgehängt sind, die von einem Motor (62) und einem Triebrad angetrieben wird.

12. Vorrichtung nach einem der Ansprüche 5 bis 11, dadurch gekennzeichnet, dass die Verschiebungseinrichtungen (62) angeordnet sind, um die Wagen in Schritten zu verschieben, die ihrem Abstand entsprechen.

13. Vorrichtung nach einem der Ansprüche 5 bis 12, dadurch gekennzeichnet, dass viele erste Bereiche mit einer Infrarotquelle (70) aufeinanderfolgend angeordnet sind, und dass die zweiten Bereiche mit einer Mikrowellenquelle (64, 66) zwischen bestimmte Paare erster aufeinanderfolgender Bereiche eingefügt sind.

14. Vorrichtung nach einem der Ansprüche 5 bis 13, dadurch gekennzeichnet, dass Bereiche ohne Mikrowellenquelle und ohne Infrarot-Element auf dem Weg der Wagen vorgesehen sind (Fig. 5).

15. Vorrichtung nach einem der Ansprüche 5 bis 14, dadurch gekennzeichnet, dass Bereiche mit gleichzeitiger Infrarot- und Mikrowellenanwendung auf dem Weg der Wagen vorgesehen sind.

16. Vorrichtung nach einem der Ansprüche 5 bis 15, dadurch gekennzeichnet, dass die ersten und zweiten Bereiche vertikal übereinander angeordnet sind, wobei ein erster Bereich mit einem Infrarot-Element (68) am höchsten Teil des Weges der Wagen angeordnet ist.

17. Vorrichtung nach einem der Ansprüche 1 bis 16, dadurch gekennzeichnet, dass der Wagen eine Unterstützung für ein zu erhitzendes Element trägt, wobei diese Unterstützung rotierbar montiert ist, um eine Änderung der Orientierung des Elementes gegenüber der Position des Infrarot-Elementes zu erlauben.

18. Vorrichtung nach Anspruch 17, dadurch gekennzeichnet, dass die Rotation der Unterstützung von einem elektrischen Motor gesteuert wird, welcher eine Achse antreibt, auf der die Unterstützung befestigt ist.

0 040 565

FIG_1

10

FIG_2

32  14  15  32 28  18  36  30

12

34

38

24  40  22  34  42  26  20

FIG_3

18

16

34

42  20

FIG_4

14

12  34

44

13

FIG_5

FIG_6

FIG_8

FIG_7